# FASCICULE DE BREVET EUROPEEN

(11) **EP 3 035 546 B1**
(45) Date de publication et mention de la délivrance du brevet: **31.10.2018**
(21) Numéro de dépôt: 15199819.2
(22) Date de dépôt: 14.12.2015
(51) Int. Cl.: H04B 1/10, H04W 16/14, H04W 88/06

(54) **PROCÉDÉ DE TRAITEMENT DANS UN SYSTÈME DE TÉLÉCOMMUNICATION ET MODULE DE TÉLÉCOMMUNICATION SANS FIL ASSOCIÉ**
VERARBEITUNGSVERFAHREN IN EINEM TELEKOMMUNIKATIONSSYSTEM, UND ENTSPRECHENDES DRAHTLOSES TELEKOMMUNIKATIONSMODUL
METHOD FOR PROCESSING IN A TELECOMMUNICATION SYSTEM AND ASSOCIATED TELECOMMUNICATION MODULE

(30) Priorité: 15.12.2014 FR 1402856
(43) Date de publication de la demande: 22.06.2016
(73) Titulaire: THALES, 92400 Courbevoie (FR)
(72) Inventeur: SOULIE, Antoine, 92622 GENNEVILLIERS CEDEX (FR); TURPIN, François, 49309 CHOLET CEDEX (FR); PIPON, François, 92622 GENNEVILLIERS CEDEX (FR)
(74) Mandataire: Lavoix

(56) Documents cités:
- WO-A1-01/06669
- US-A1- 2004 239 559
- US-A1- 2007 064 835

## Description

La présente invention concerne un procédé de traitement dans un système de télécommunication comprenant un premier module de télécommunication sans fil selon un premier protocole de télécommunication sans fil, ledit premier module étant adapté pour recevoir un signal comportant au moins un premier signal selon le premier protocole sur un canal de transmission sans fil et comprenant un bloc de calcul automatique de gain qui détermine une valeur courante de gain en fonction du signal reçu dans ledit canal de transmission sans fil et un amplificateur adapté pour amplifier ledit signal premier reçu en fonction de ladite valeur courante de gain déterminée en fonction dudit signal reçu.

On connaît du document US 2007/0064835 A1 un procédé consistant à mettre en oeuvre, suite à la réception d'une notification, une contre-mesure afin de réduire les effets d'interférences.

On connaît également du document US 2004/0239559 A1 un procédé consistant à réduire des interférences en détectant un signal de brouillage et en générant un signal synchronisé avec ledit signal de brouillage.

On connaît, en outre, du document WO 01/06669 A1 un procédé mis en oeuvre au niveau d'un récepteur et d'un émetteur-récepteur et consistant à anticiper les intervalles durant lesquels l'émetteur-récepteur est actif pour désensibiliser le récepteur durant lesdits intervalles.

Par exemple, les transpondeurs ATC (en anglais « Air Traffic Control ») embarqués à bord des avions sont utilisés pour communiquer les position, altitude et/ou identité des avions. Cette communication peut être une réponse générée par l'ATC consécutivement à la réception d'une interrogation émise par un radar secondaire. Ce radar secondaire est associé à un radar primaire qui ne procède qu'à la détection de la position de l'avion en distance et azimut via la réception d'un écho.

Cette réponse peut également être générée suite à des interrogations venant d'autres avions situés dans l'espace aérien environnant. Ces interrogations sont émises par un système appelé TCAS (« Traffic Collision Avoidance System ») destiné à prévenir les collisions.

Dans le cas de réponses ATC correspondant à des trains d'impulsions de fréquence de 1090 MHz (mégahertz) véhiculant les messages de position, altitude et/ou identité des avions, la seconde harmonique d'une réponse ATC est centrée sur une fréquence Frₕ₂, égale à 2180 MHz et a un niveau de puissance de l'ordre de quelques watts.

La Demanderesse souhaite doter les avions de moyens de télécommunications mobiles, par exemple de type LTE, qui reçoivent les flux provenant des émetteur au sol en utilisant une bande de radiofréquence qui contient cette seconde harmonique.

Or la capacité en réception de ces moyens de télécommunications LTE embarqués dans un avion est lourdement impactée lors de l'émission de réponses ATC par le transpondeur également embarqué dans l'avion, car les trains d'impulsions aveuglent et invalident, du fait du mécanisme de gain adaptatif de ces moyens de télécommunications, la réception, et ce pendant une durée très longue comprenant le temps de dé-sensibilisation et de re-sensibilisation du récepteur qui est nécessaire à ce dernier pour qu'il retrouve le gain lui permettant de traiter à nouveau correctement des signaux LTE reçus.

En effet, suite à chaque train d'impulsions, le gain décroît fortement et pendant toute la durée de re-sensibilisation, le gain est insuffisant pour traiter correctement le signal LTE.

Il en résulte une perte de débit et un accroissement de la latence de communication LTE pouvant rendre non opérationnel les moyens de télécommunication LTE lorsque les émissions par le transpondeur sont fréquentes, notamment lorsque les récurrences de trains d'impulsions sont supérieures ou égales à 500 trains par seconde, tel que classiquement rencontré.

A cet effet, suivant un premier aspect, l'invention propose un procédé de traitement dans un système de télécommunication du type précité caractérisé en ce que le système de télécommunication comportant un deuxième module de télécommunication sans fil adapté pour émettre de façon intermittente des deuxièmes signaux sur le canal de communication sans fil selon un deuxième protocole de communication, chaque deuxième signal étant de durée inférieure à Tₘₐₓ, le procédé comprend une étape selon laquelle lorsqu'un deuxième signal est déterminé, par le bloc de calcul automatique de gain, comme présent dans le signal reçu par le premier module dans ledit canal de transmission sans fil, une valeur courante de gain est alors déterminée par le bloc de calcul automatique de gain de façon indépendante de la puissance dudit deuxième signal.

La solution proposée permet de réduire les inconvénients de l'art antérieur, notamment de limiter l'impact de l'émission des deuxièmes signaux sur la réception du premier signal sur ledit canal.

Dans des modes de réalisation, le procédé de traitement dans un système de télécommunication suivant l'invention comporte en outre une ou plusieurs des caractéristiques suivantes :
- le bloc de calcul automatique de gain détecte une augmentation de puissance dudit signal reçu et pour, suite à la détection de ladite augmentation, n'actualise la valeur du gain en fonction du signal de puissance ainsi augmentée que si l'augmentation de l'amplitude persiste au-delà d'une durée égale à Tₘₐₓ ;
- le bloc de calcul automatique de gain fige la valeur actualisée du gain à partir de ladite détection pendant une temporisation au moins égale à Tₘₐₓ ou égale au minimum entre Tₘₐₓ et la durée pendant laquelle persiste l'augmentation de puissance ;
- dans un mode de fonctionnement nominal du bloc de calcul automatique de gain, ledit bloc de calcul automatique de gain détermine la valeur courante de gain en fonction de la puissance du signal reçu dans ledit canal de transmission sans fil ;
ledit procédé comprend les étapes suivantes lorsqu'un deuxième signal est à émettre par le deuxième module de télécommunication sans fil :
- estimation d'une temporisation fonction de la durée nécessaire pour l'émission par le deuxième module de télécommunication sans fil dudit deuxième signal ;
- suite à ladite estimation, déclenchement d'un mode de fonctionnement auxiliaire du bloc de calcul automatique de gain, pendant une durée égale à ladite temporisation estimée et pendant laquelle le deuxième signal est émis, selon lequel le bloc de calcul automatique de gain détermine une valeur courante de gain de façon indépendante de la puissance du deuxième signal reçu dans ledit canal de transmission sans fil ;
   - un deuxième signal à émettre est une réponse à un message indiquant un code et reçu par le deuxième module, et ladite durée nécessaire pour l'émission dudit deuxième signal est estimée en fonction dudit code ;
   - le système de télécommunication est embarqué à bord d'un bâtiment mobile, le premier module de télécommunication sans fil est un récepteur de radiocommunications mobiles adapté pour communiquer avec un réseau distant de radiocommunications mobiles et le deuxième module de télécommunication sans fil est un transpondeur adapté pour communiquer avec un radar distant et/ou un transpondeur distant ;
   - le premier protocole de télécommunication sans fil est un protocole LTE ;
   - le deuxième signal du signal reçu dans ledit canal de transmission sans fil par le premier module de télécommunication sans fil est amplifié par l'amplificateur en fonction de ladite valeur actualisée de gain calculée ;
   - le premier protocole de télécommunication sans fil est adapté pour que le premier module détecte qu'il n'a pas correctement reçu un signal qui lui est destiné et pour suite à ladite détection, reconstruire correctement ou faire ré-émettre ledit premier signal à destination du deuxième module ;
   - le premier protocole de télécommunication sans fil est adapté pour que le premier module détecte qu'il n'a pas correctement reçu un signal qui lui est destiné et pour suite à ladite détection, reconstruire correctement ou faire ré-émettre ledit premier signal à destination du deuxième module.

Suivant un deuxième aspect, la présente invention propose un module de télécommunication sans fil selon un premier protocole de télécommunication sans fil, adapté pour recevoir, sur un canal de transmission sans fil, un signal comportant au moins un premier signal selon le premier protocole et comprenant un bloc de calcul automatique de gain adapté pour déterminer une valeur de gain en fonction du signal reçu dans ledit canal de transmission sans fil et un amplificateur adapté pour amplifier ledit signal reçu en fonction d'une valeur de gain déterminée par le bloc de calcul automatique de gain ;
ledit module de télécommunication sans fil étant destiné à un système de télécommunication comprenant un autre module de télécommunication sans fil adapté pour émettre de façon intermittente des deuxièmes signaux sur le canal de communication sans fil selon un deuxième protocole de communication, chacun deuxième signal étant de durée inférieure à Tₘₐₓ,
ledit module de télécommunication sans fil selon un premier protocole de télécommunication sans fil étant caractérisé en ce que le bloc de calcul automatique de gain est adapté pour, lorsqu'il détermine qu'un deuxième signal est présent dans le signal reçu, déterminer une valeur courante de gain de façon indépendante de la puissance dudit deuxième signal.

Dans des modes de réalisation, le module de télécommunication sans fil comporte en outre une ou plusieurs des caractéristiques suivantes :
- le bloc de calcul automatique de gain est adapté pour détecter une augmentation de puissance dudit signal reçu et pour, suite à la détection de ladite augmentation, n'actualiser la valeur du gain en fonction du signal de puissance ainsi augmentée que si l'augmentation de l'amplitude persiste au-delà d'une durée égale à Tₘₐₓ ;
- le bloc de calcul automatique de gain est adapté pour figer la valeur actualisée du gain à partir de ladite détection et pendant une temporisation égale à Tₘₐₓ ou égale au minimum entre Tₘₐₓ et la durée pendant laquelle persiste l'augmentation de puissance ;
- dans un mode de fonctionnement nominal du bloc de calcul automatique de gain, ledit bloc de calcul automatique de gain est adapté pour déterminer la valeur courante de gain en fonction de la puissance du signal reçu dans ledit canal de transmission sans fil ; et pour lorsqu'un deuxième signal est à émettre par le deuxième module de télécommunication sans fil, estimer une temporisation fonction de la durée nécessaire pour l'émission par le deuxième module de télécommunication sans fil dudit deuxième signal et déclencher un mode de fonctionnement auxiliaire du bloc de calcul automatique de gain, pendant une durée au moins égale à ladite temporisation estimée et pendant laquelle le deuxième signal est émis, dans lequel le bloc de calcul automatique de gain est adapté pour déterminer une valeur courante de gain de façon indépendante de la puissance du deuxième signal reçu dans ledit canal de transmission sans fil ;
- un deuxième signal à émettre est une réponse à un message indiquant un code et reçu par le deuxième module, et ladite durée nécessaire pour l'émission dudit deuxième signal est estimée en fonction dudit code ;
- le module de télécommunication sans fil est destiné à un système de télécommunication embarqué à bord d'un bâtiment mobile, ledit module de télécommunication sans fil étant un récepteur de radiocommunications mobiles adapté pour communiquer avec un réseau distant de radiocommunications mobiles et lesdits deuxièmes signaux étant émis par un transpondeur adapté pour communiquer avec un radar distant et/ou un transpondeur distant, et
- le premier protocole de télécommunication sans fil est un protocole LTE.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue d'un système de télécommunication sans fil dans un mode de réalisation de l'invention ;
- la figure 2 représente un organigramme d'étapes d'un procédé dans un mode de réalisation de l'invention ;
- la figure 3 est une vue partielle de l'émetteur-récepteur 4 dans un mode de réalisation.

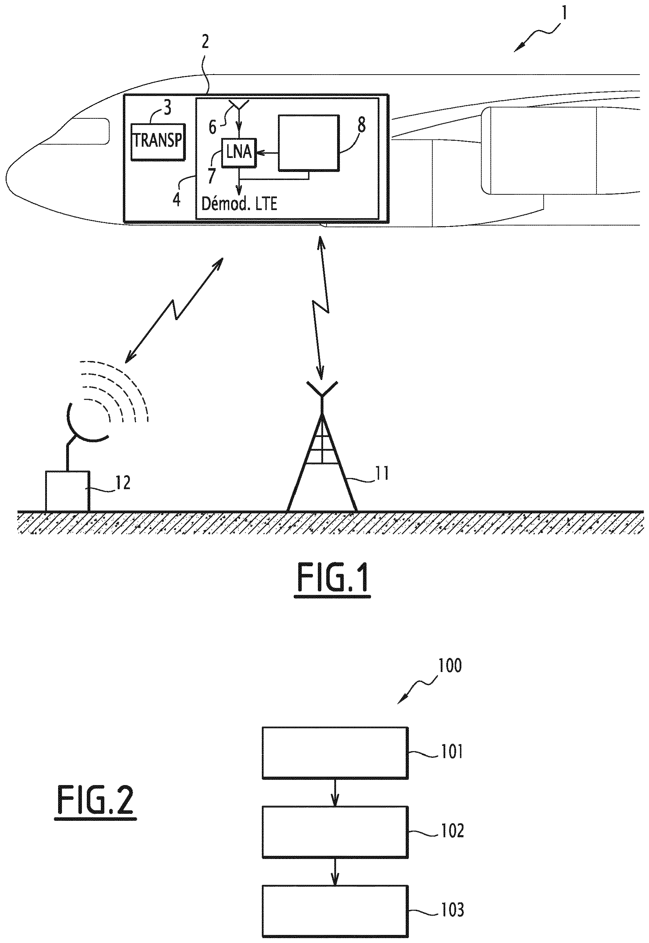

La figure 1 est une vue d'un système 2 de télécommunication sans fil dans un mode de réalisation de l'invention.

Dans le cas présent, le système 2 de télécommunication sans fil est embarqué dans un avion 1.

Le système 2 de télécommunication sans fil comporte un transpondeur 3 et un émetteur-récepteur LTE 4.

Le transpondeur 3, de type ATC, est adapté pour recevoir des messages d'interrogation provenant d'un équipement distant 12 (par exemple un radar secondaire au sol ou encore un transpondeur à bord d'un autre avion etc.).

Ces messages d'interrogation requièrent la fourniture, par le transpondeur 3, de caractéristiques de l'avion 1 telles que l'identité de l'avion et/ou son altitude courante et/ou sa position et/ou un code indiquant sa situation opérationnelle (panne radio, détournement etc.) et comportent au moins un code d'interrogation respectif indiquant laquelle de ces caractéristiques est requise (ou lesquelles de ces caractéristiques sont requises) conformément à l'un des trois modes ATC : A, C ou S .

Un tel message d'interrogation dans le cas considéré prend la forme d'un train d'impulsions à une fréquence Fi, par exemple Fi = 1030 MHz.

Le transpondeur 3 est adapté pour préparer et émettre, un message de réponse ATC au message d'interrogation.

Le contenu d'un message de réponse ATC comporte la ou les caractéristiques de l'avion 1 requise(s) dans le message d'interrogation.

Dans le cas considéré, un message de réponse ATC prend la forme d'un train d'impulsions émis à une radiofréquence Fr, par exemple Fr = 1090 MHz, et la longueur de ce train est au maximum Tₘₐₓ = 120 microsecondes (µs) : suivant la ou les caractéristiques transmises, la longueur du train est soit de 25 µs, soit de 120 µs.

La seconde harmonique d'un message de réponse ATC est centrée sur une fréquence Frₕ₂, égale à 2180 MHz et s'étale sur environ 10 MHz.

Le niveau de puissance de cette seconde harmonique est typiquement de quelques watts.

L'émetteur-récepteur LTE 4 est adapté pour émettre, respectivement recevoir, des données à destination, respectivement en provenance, d'au moins une station de base 11, de type eNode B, disposée au sol et à portée radio de l'émetteur-récepteur LTE 4.

Ces émissions et réceptions de données sont réalisées conformément au protocole LTE (en anglais « Long Term Evolution ») défini par le consortium 3GPP.

La bande de réception de l'émetteur-récepteur 4 est la bande B_{rec}, qui est la bande [2170 MHz, 2185 MHz] dans le cas considéré.

L'émetteur-récepteur LTE 4 comprend une antenne 6 de réception de signaux LTE dans ladite bande. L'émetteur-récepteur LTE 4 comprend un circuit de réception des signaux reçus via l'antenne 6 et correspondant à la bande B_{rec}, ledit circuit de réception comprenant un étage amplificateur 7 et un bloc 8 de contrôle automatique de gain.

L'antenne 6 reçoit un signal courant dans la bande B_{rec} et fournit, après filtrage des signaux dans cette bande, ce signal courant reçu à l'amplificateur 7.

L'émetteur-récepteur LTE 4 comprend en outre un circuit d'émission des signaux LTE (non représenté).

L'étage amplificateur 7, par exemple de type amplificateur faible bruit, dit LNA (de l'anglais « Low Noise Amplifier »), est adapté pour amplifier le signal courant qui lui est fourni en entrée par l'antenne 6, en le multipliant par un gain dont la valeur lui est fournie par le bloc 8 de contrôle automatique de gain.

Ce signal amplifié fourni par l'étage amplificateur 7 subit ensuite des traitements mis en oeuvre par le circuit de réception de l'émetteur-récepteur 4, parmi lesquels la conversion en bande de base, le traitement en bande de base, puis de démodulation LTE.

Le signal amplifié est également fourni en entrée du bloc 8 de contrôle automatique de gain.

Le bloc 8 de contrôle automatique de gain est adapté pour déterminer, en fonction du signal dernièrement reçu dans la bande B_{rec} (typiquement le signal dernièrement reçu est l'ensemble du signal reçu et fourni par l'antenne 6 depuis une fenêtre temporelle de durée T₀ se terminant à l'instant courant considéré t, avec T₀ fixé en fonction du mode de réalisation), la valeur courante du gain à appliquer par l'amplificateur 7 sur le signal courant reçu.

Le but de ce gain adaptatif est d'obtenir en sortie de l'étage amplificateur 7 un signal d'amplitude sensiblement constante, égale à une valeur d'amplitude-cible (typiquement le gain est faible quand la puissance du signal LTE dernièrement reçu est grande, et le gain est fort quand la puissance du signal LTE dernièrement reçu est faible : le gain est une puissance décroissante de la puissance du signal LTE dernièrement reçu).

Selon l'invention, le bloc 8 de contrôle automatique de gain est adapté pour déterminer une valeur courante de gain, en fonction du signal dernièrement reçu et fourni par l'antenne 6, de manière indépendante de la puissance d'un message de réponse ATC émis par le transpondeur 3 lorsqu'il est déterminé par le bloc 8, qu'un tel message de réponse ATC fait partie du signal courant reçu..

Ainsi suivant l'invention, l'émetteur-récepteur 4 est adapté pour mettre en oeuvre l'ensemble d'étapes 100 comprenant les étapes 101, 102, 103.

Dans une étape 101, le signal courant, nommé S(t), reçu par l'antenne 6 dans la bande B_{rec} est fourni à l'instant t à l'étage amplificateur 7.

Dans une étape 102, l'étage amplificateur 7 amplifie le signal courant reçu S(t) par la valeur courante fournie par le bloc 8 de contrôle automatique de gain et fournit le signal ainsi amplifié, nommé Sₐ(t), en parallèle à la partie du circuit de réception chargé de la démodulation LTE et au bloc 8 de contrôle automatique de gain.

Dans une étape 103, le bloc 8 de contrôle automatique de gain détermine une valeur actualisée de gain en fonction du signal reçu (i.e. en fonction de Sₐ(t)).

Et lorsqu'un message de réponse ATC émis par le transpondeur 3 fait partie du signal reçu, le bloc 8 de contrôle automatique de gain détermine une valeur actualisée de gain de manière indépendante de la puissance de ce message de réponse ATC.

Le bloc 8 de contrôle automatique de gain délivre à l'étage amplificateur 7 cette valeur courante actualisée de gain déterminée.

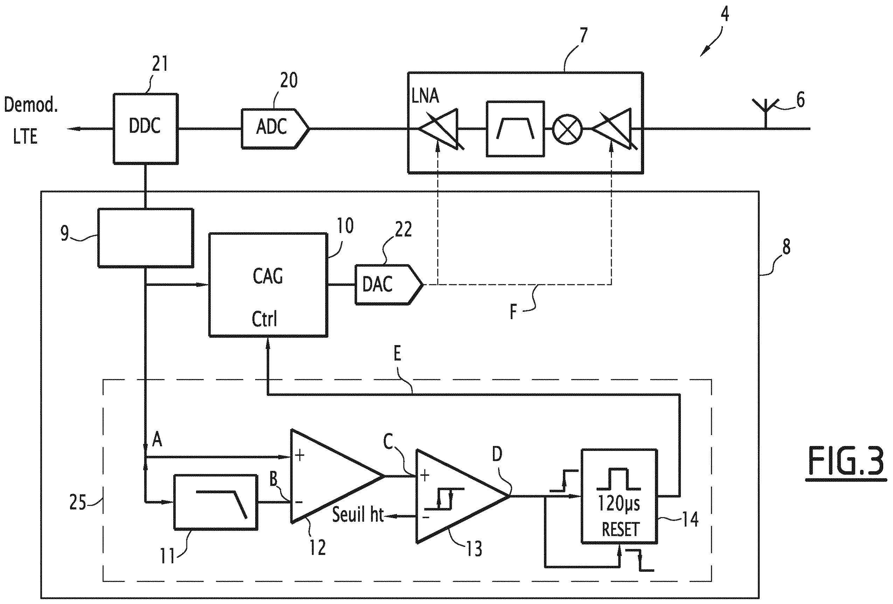

Dans une mise en oeuvre particulière d'un premier mode de réalisation, il est fait référence à la partie de l'émetteur-récepteur 4 représentée en figure 3.

L'émetteur-récepteur 4 comprend l'antenne 6, l'étage amplificateur 7, un convertisseur analogique-numérique 20, un abaisseur de fréquence numérique 21, encore appelé DDC 21, (en anglais « Digital Down Concerter ») et le bloc 8 de contrôle automatique de gain.

Le bloc 8 de contrôle automatique de gain comprend un détecteur d'enveloppe 9, un bloc de calcul 10, un convertisseur numérique-analogique 22 et un contrôleur de calcul de gain 25.

Le contrôleur de calcul de gain 25 comprend, dans le cas considéré, un filtre passe-bas 11, un soustracteur 12, un comparateur à hystérésis 13 et un dispositif de temporisation 14.

Ce traitement permet de supprimer du signal pris en compte pour l'adaptation du gain les composantes de durée égale ou inférieure à Tₘₐₓ.

Ainsi, dans ce premier mode de réalisation de l'invention, les sous-étapes suivantes ont lieu au cours de l'étape 102.

Le signal reçu par l'antenne, auquel est ensuite appliqué un filtrage passe-bande de bande passante la bande B_{rec} est fourni à l'étage amplificateur 7. L'étage amplificateur 7 applique au signal qu'il reçoit en entrée le gain courant alors calculé par le bloc 8 de contrôle automatique de gain. Le signal ainsi amplifié est numérisé par le convertisseur analogique-numérique 20, abaissé en fréquence par le DDC 21, puis est envoyé, d'une part vers le dispositif de démodulation LTE, d'autre part vers le bloc 8 de contrôle automatique de gain.

Dans le bloc 8 de contrôle automatique de gain, l'enveloppe du signal remis en entrée est détectée par le détecteur d'enveloppe 9. Et ce signal issu du détecteur d'enveloppe 9 est envoyé, d'une part vers le bloc de calcul 10, d'autre part vers le contrôleur de calcul de gain 25 (point A).

Le soustracteur 12 effectue la différence entre l'amplitude du signal entrant au point A et l'amplitude de la valeur moyenne dudit signal (reçu au point B), valeur moyenne obtenue par passage dudit signal dans le filtre passe-bas 11 de fréquence de coupure très inférieure à l'inverse du temps de réaction voulu pour le contrôleur de calcul de gain 25 (typiquement dans le cas considéré, la fréquence de coupure est choisie égale à 800 Hz).

La différence (obtenue au point C) entre le signal entrant et sa valeur moyenne est ensuite appliquée à l'entrée positive du comparateur d'amplitude 13 à hystérésis. Sur l'entrée négative du comparateur 13 est appliquée une valeur de seuil haut. L'effet du comparateur à hystérésis 13 résulte en ce que le franchissement du seuil haut par le signal appliqué à l'entrée positive résultera en un basculement à l'état haut de la sortie du comparateur si ce franchissement de seuil correspond à une augmentation de l'amplitude du signal. Le basculement à l'état bas de la sortie du comparateur interviendra si le signal appliqué à l'entrée positive prend une valeur nulle et si ce franchissement de seuil correspond à une diminution de l'amplitude du signal.

Ainsi une forte augmentation du signal en entrée du contrôleur 25 (point A) induira donc un basculement à l'état haut de la sortie du comparateur 13 (point D). Un retour à l'amplitude initiale du signal remettra la sortie du comparateur 13 à l'état bas.

La sortie du comparateur 13 (point D) est appliquée, d'une part à l'entrée de déclenchement du dispositif de temporisation 14 et d'autre part à l'entrée de réinitialisation de ce dispositif de temporisation 14. Le passage de l'état bas à l'état haut (front montant) sur l'entrée de déclenchement du dispositif de temporisation 14 déclenche l'activation d'un signal de commande (point E) pendant une temporisation légèrement supérieure à la durée des salves les plus longues du signal ATC (qui sont ici de 120 µs). Le passage de l'état haut à l'état bas (front descendant) sur l'entrée de réinitialisation du dispositif de temporisation 14 interrompt l'activation d'un signal de commande qui aurait été précédemment déclenchée (point E).

Une forte augmentation du signal en entrée du dispositif (point A) induira donc un déclenchement d'activation du signal de commande (point E) pour une durée de 120 µs. La fin de la temporisation interrompt l'activation du signal de commande. Un retour à l'amplitude initiale du signal interrompt l'activation du signal de commande (dans le cas, par exemple, d'un retour à l'amplitude initiale après une augmentation forte du signal pendant une durée de 25 µs).

Le signal de commande ci-dessus (point E) est appliqué à une entrée de blocage du bloc de calcul de gain 10.

L'activation du signal de commande impose au bloc de calcul de gain 10 de maintenir constant le gain fourni à l'étage amplificateur 7 (point F), et de valeur égale à la valeur de ce gain présente au moment du déclenchement de l'activation du signal de commande. L'interruption du signal de commande autorise le bloc de calcul de gain 10 à actualiser le gain en fonction de la valeur du signal présent sur son entrée (le gain alors déterminé étant une fonction décroissante de la puissance du signal présent de manière à obtenir en sortie de l'amplificateur 7 un signal d'amplitude constante).

Une forte augmentation du signal au point A résultera donc en une variation correspondante du gain appliqué par l'étage amplificateur 7 (point F) uniquement si la nouvelle valeur du signal d'entrée dure plus de 120 µs. Une augmentation «modérée» ou une diminution du signal au point A résulteront en une variation du gain appliqué par l'étage amplificateur 7 comme si le contrôleur de calcul de gain 25 était absent (ce dernier est transparent aux évolutions «naturelles» du signal LTE).

Le temps de réaction du bloc 8 de contrôle automatique de gain sur l'apparition d'un signal de forte puissance dans la bande B_{rec} est bref (dé-sensibilisation), mais le temps de re-sensibilisation est plus long (plusieurs ms) afin de ne pas gommer la modulation d'enveloppe du signal reçu.

Ce traitement a pour fonction d'éliminer les variations rapides du niveau du signal reçu (de durée inférieure à Tₘₐₓ, ici Tₘₐₓ =120 µs) afin de ne faire prendre en compte dans le calcul adaptatif du bloc 10 de calcul de gain que les variations de niveau correspondant à une évolution du signal utile pour le récepteur LTE, du type fading lent, masquage d'antenne...

A l'apparition brutale d'un signal de niveau fort sur l'antenne 6, les cas suivants peuvent se présenter :
- la variation de niveau est liée à une évolution brusque du signal utile : la réaction du bloc 8 de contrôle automatique de gain, et donc l'adaptation du gain, est différée de Tₘₐₓ, ici Tₘₐₓ = 120 µs : le récepteur est « aveuglé » pendant une durée maximale de Tₘₐₓ i.e. le signal fourni par l'amplifieur va être trop fort par rapport à l'amplitude cible pendant 120 µs ;
- la variation de niveau est due à l'émission d'un train d'impulsions ATC de 25 µs par le transpondeur 3 : la réaction du bloc 8 de contrôle automatique de gain suite à cette variation est inhibée par l'action du filtre 9 ; le récepteur est « aveuglé » pendant une durée maximale de Tₘₐₓ de 120 µs, mais il n'y a plus de temps mort de re-sensibilisation de plusieurs ms à la fin de l'émission du train d'impulsion comme subi dans le fonctionnement selon l'art antérieur ;
- la variation de niveau est due à l'émission d'un train d'impulsions ATC de Tₘₐₓ = 120 µs par le transpondeur 3 : la réaction du bloc 8 de contrôle automatique de gain suite à cette variation est inhibée par l'action du filtre 9 ; le récepteur est « aveuglé » pendant une durée Tₘₐₓ de 120 µs, mais là encore il n'y a plus de temps mort de re-sensibilisation de plusieurs ms à la fin de l'émission du train d'impulsion comme subi dans le fonctionnement selon l'art antérieur.

Dans un deuxième mode de réalisation particulier de l'invention, le bloc de contrôle automatique de gain 8 est adapté pour fonctionner selon deux modes alternatifs de fonctionnement : le mode de fonctionnement nominal et le mode de fonctionnement auxiliaire.

Dans un mode de réalisation, le basculement vers le mode de fonctionnement auxiliaire est déclenché par la réception par le bloc 8 de contrôle automatique de gain d'une notification émise par le transpondeur 3 à destination du bloc 8 via un bus de communication indiquant l'envoi imminent d'un message de réponse ATC par le transpondeur 3.

Dans un mode de réalisation, la durée Tₜᵣₐᵢₙ du message de réponse qui va être envoyé (cette durée dépendant du message d'interrogation correspondant) est indiquée dans la notification.

Dans le mode de fonctionnement nominal, ledit bloc de contrôle automatique de gain 8 détermine, dans l'étape 102, la valeur courante de gain G en fonction de la puissance du signal dernièrement reçu dans ledit canal de transmission sans fil, i.e. en fonction de S(t-θ) pour tout θ compris entre 0 et T₀.

Dans le mode de fonctionnement auxiliaire du bloc 8 de contrôle automatique de gain, le bloc de contrôle automatique de gain détermine une valeur courante de gain G(t) en fonction d'un gain calculé par le bloc 8 de contrôle automatique de gain avant de basculer dans le mode de fonctionnement auxiliaire (ou bien d'une valeur prédéterminée, correspondant par exemple à un gain moyen d'un signal LTE reçu sans présence de réponse ATC).

Et le bloc 8 de contrôle automatique de gain est adapté pour basculer dans le mode de fonctionnement auxiliaire juste avant qu'un train d'impulsions ATC ne soit émis par le transpondeur 3, pour rester dans ce mode de fonctionnement auxiliaire pendant une temporisation TEMP et pour basculer depuis le mode de fonctionnement auxiliaire vers le mode de fonctionnement nominal à l'issue de la temporisation TEMP.

La valeur de la temporisation TEMP est choisie au moins égale à la durée d'émission dudit train d'impulsions.

Selon les modes de réalisation, TEMP est prise égale à la durée d'émission dudit train d'impulsions Tₜᵣₐᵢₙ (égale à 25 ou 120 µs en fonction du type de réponse) ou égale à la durée maximale Tₘₐₓ. Ou encore TEMP est prise égale à la somme de Tₜᵣₐᵢₙ (ou Tₘₐₓ) et de T₀.

L'invention permet de réduire les inconvénients de l'art antérieur, notamment de limiter l'impact des impulsions des messages de réponse des transpondeurs sur les communications LTE à un niveau correspondant sensiblement à la durée réelle d'émission des messages de réponse.

En outre, dans les différents modes de réalisation, il va être détecté par l'émetteur-récepteur LTE 4 et/ou l'eNode B 11, si des données émises par l'eNode B 11 n'ont pas été reçues par l'émetteur-récepteur LTE 4, grâce aux algorithmes de fiabilisation des transmissions du protocole LTE. Les erreurs de transmission dues aux données manquantes sont corrigées par l'émetteur-récepteur 4 à l'aide de redondances dans les données reçues (et sans avoir recours à des retransmissions) ou alors les données manquantes sont retransmises.

De tels algorithmes sont par exemple les algorithmes H-ARQ (en anglais « Hybrid Automatic Repeat reQuest ») et RLC (en anglais « Radio Link Control ») notamment. H-ARQ en particulier agit dans les 1 à 2 millisecondes, ce qui permet de limiter fortement les conséquences d'un aveuglement et de rendre cette dernière imperceptible pour les communications LTE de type data ou phonie.

Dans le mode de réalisation particulier décrit ci-dessus, une harmonique du signal principal émis par le transpondeur et la bande de réception de l'émetteur-récepteur LTE comportaient un même canal ; l'invention peut bien sûr être utilisée dans un cas où le signal principal lui-même émis par le transpondeur et la bande de réception du module LTE partagent un même canal.

L'invention a été décrite ci-dessus relativement à un transpondeur et à un émetteur-récepteur LTE. Bien sûr, dans un autre mode de réalisation de l'invention, le transpondeur et l'émetteur-récepteur LTE sont, l'un et/ou l'autre, remplacés par tout type d'autres équipements radiofréquences utilisant un canal radiofréquence commun.

Dans le mode de réalisation particulier décrit ci-dessus, la durée des messages pouvait prendre deux valeurs alternatives ; dans d'autres modes de réalisation, la durée des messages peut prendre un nombre quelconque de valeurs.

Par ailleurs, dans le mode de réalisation décrit ci-dessus, le contrôle automatique de gain est réalisé sur le signal après amplification. Dans un autre mode de réalisation, il est réalisé sur le signal avant amplification.

## Revendications

1. Procédé de traitement dans un système (2) de télécommunication comprenant un premier module (5) de télécommunication sans fil selon un premier protocole de télécommunication sans fil, ledit premier module étant adapté pour recevoir un signal comportant au moins un premier signal selon le premier protocole sur un canal de transmission sans fil et comprenant un bloc de calcul automatique de gain (8) qui détermine une valeur de gain en fonction du signal reçu dans ledit canal de transmission sans fil et un amplificateur adapté pour amplifier ledit signal reçu en fonction d'une valeur de gain déterminée par le bloc de calcul automatique de gain (8);
le procédé étant **caractérisé en ce que**, le système de télécommunication comportant un deuxième module (3) de télécommunication sans fil adapté pour émettre de façon intermittente des deuxièmes signaux sur le canal de communication sans fil selon un deuxième protocole de communication, chaque deuxième signal étant de durée inférieure à Tₘₐₓ, le procédé comprend une étape selon laquelle lorsqu'un deuxième signal est déterminé, par le bloc de calcul automatique de gain, comme présent dans le signal reçu par le premier module dans ledit canal de transmission sans fil, une valeur courante de gain est alors déterminée par le bloc de calcul automatique de gain de façon indépendante de la puissance dudit deuxième signal, le bloc de calcul automatique de gain (8) détecte une augmentation de puissance dudit signal reçu et pour, suite à la détection de ladite augmentation, n'actualise la valeur du gain en fonction du signal de puissance ainsi augmentée que si l'augmentation de l'amplitude persiste au-delà d'une durée égale à Tₘₐₓ.

2. Procédé selon la revendication 1, dans lequel le bloc de calcul automatique de gain (8) fige la valeur actualisée du gain à partir de ladite détection pendant une temporisation égale à Tₘₐₓ ou égale au minimum entre Tₘₐₓ et la durée pendant laquelle persiste l'augmentation de puissance.

3. Procédé selon la revendication 1, dans lequel, dans un mode de fonctionnement nominal du bloc de calcul automatique de gain, ledit bloc de calcul automatique de gain (8) détermine la valeur courante de gain en fonction de la puissance du signal reçu dans ledit canal de transmission sans fil ;
ledit procédé comprend les étapes suivantes lorsqu'un deuxième signal est à émettre par le deuxième module de télécommunication sans fil :
- estimation d'une temporisation fonction de la durée nécessaire pour l'émission par le deuxième module (3) de télécommunication sans fil dudit deuxième signal ;
- suite à ladite estimation, déclenchement d'un mode de fonctionnement auxiliaire du bloc de calcul automatique de gain, pendant une durée au moins égale à ladite temporisation estimée et pendant laquelle le deuxième signal est émis, selon lequel le bloc de calcul automatique de gain détermine une valeur courante de gain de façon indépendante de la puissance du deuxième signal reçu dans ledit canal de transmission sans fil.

4. Procédé selon la revendication 3, dans lequel un deuxième signal à émettre est une réponse à un message indiquant un code et reçu par le deuxième module, et ladite durée nécessaire pour l'émission dudit deuxième signal est estimée en fonction dudit code.

5. Procédé selon l'une quelconque des revendications 1 à 4, dans lequel le système de télécommunication (2) est embarqué à bord d'un bâtiment mobile (1), le premier module (5) de télécommunication sans fil est un récepteur de radiocommunications mobiles adapté pour communiquer avec un réseau distant de radiocommunications mobiles et le deuxième module (3) de télécommunication sans fil est un transpondeur adapté pour communiquer avec un radar distant et/ou un transpondeur distant.

6. Procédé l'une quelconque des revendications 1 à 5, dans lequel le premier protocole de télécommunication sans fil est un protocole LTE.

7. Procédé selon l'une quelconque des revendications 1 à 6, dans lequel le deuxième signal du signal reçu dans ledit canal de transmission sans fil par le premier module (5) de télécommunication sans fil est amplifié par l'amplificateur en fonction de ladite valeur actualisée de gain calculée.

8. Procédé selon l'une quelconque des revendications 1 à 7, dans lequel le premier protocole de télécommunication sans fil est adapté pour que le premier module détecte qu'il n'a pas correctement reçu un signal qui lui est destiné et pour suite à ladite détection, reconstruire correctement ou faire ré-émettre ledit premier signal à destination du deuxième module.

9. Module (5) de télécommunication sans fil selon un premier protocole de télécommunication sans fil, adapté pour recevoir, sur un canal de transmission sans fil, un signal comportant au moins un premier signal selon le premier protocole et comprenant un bloc de calcul automatique de gain (8) adapté pour déterminer une valeur de gain en fonction du signal reçu dans ledit canal de transmission sans fil et un amplificateur adapté pour amplifier ledit signal reçu en fonction d'une valeur de gain déterminée par le bloc de calcul automatique de gain;
ledit module de télécommunication sans fil étant destiné à un système (2) de télécommunication comprenant un autre module (3) de télécommunication sans fil adapté pour émettre de façon intermittente des deuxièmes signaux sur le canal de communication sans fil selon un deuxième protocole de communication, chacun deuxième signal étant de durée inférieure à Tₘₐₓ,
ledit module de télécommunication sans fil selon un premier protocole de télécommunication sans fil étant **caractérisé en ce que** le bloc de calcul automatique de gain est adapté pour, lorsqu'il détermine qu'un deuxième signal est présent dans le signal reçu, déterminer une valeur courante de gain de façon indépendante de la puissance dudit deuxième signal, et **en ce que** le bloc de calcul automatique de gain (8) est adapté pour détecter une augmentation de puissance dudit signal reçu et pour, suite à la détection de ladite augmentation, n'actualiser la valeur du gain en fonction du signal de puissance ainsi augmentée que si l'augmentation de l'amplitude persiste au-delà d'une durée égale à Tₘₐₓ.

10. Module (5) de télécommunication sans fil selon la revendication 9, dans lequel le bloc de calcul automatique de gain (8) est adapté pour figer la valeur actualisée du gain à partir de ladite détection et pendant une temporisation égale à Tₘₐₓ ou égale au minimum entre Tₘₐₓ et la durée pendant laquelle persiste l'augmentation de puissance.

11. Module (5) de télécommunication sans fil selon la revendication 9, dans lequel, dans un mode de fonctionnement nominal du bloc de calcul automatique de gain, ledit bloc de calcul automatique de gain (8) est adapté pour déterminer la valeur courante de gain en fonction de la puissance du signal reçu dans ledit canal de transmission sans fil ; et pour lorsqu'un deuxième signal est à émettre par le deuxième module de télécommunication sans fil, estimer une temporisation fonction de la durée nécessaire pour l'émission par le deuxième module (3) de télécommunication sans fil dudit deuxième signal et déclencher un mode de fonctionnement auxiliaire du bloc de calcul automatique de gain, pendant une durée au moins égale à ladite temporisation estimée et pendant laquelle le deuxième signal est émis, dans lequel le bloc de calcul automatique de gain est adapté pour déterminer une valeur courante de gain de façon indépendante de la puissance du deuxième signal reçu dans ledit canal de transmission sans fil.

12. Module (5) de télécommunication sans fil selon la revendication 11, dans lequel un deuxième signal à émettre est une réponse à un message indiquant un code et reçu par le deuxième module, et ladite durée nécessaire pour l'émission dudit deuxième signal est estimée en fonction dudit code.

13. Module (5) de télécommunication sans fil selon l'une quelconque des revendications 9 à 12, pour un système de télécommunication (2) embarqué à bord d'un bâtiment mobile (1), ledit module (5) de télécommunication sans fil étant un récepteur de radiocommunications mobiles adapté pour communiquer avec un réseau distant de radiocommunications mobiles et lesdits deuxièmes signaux étant émis par un transpondeur adapté pour communiquer avec un radar distant et/ou un transpondeur distant.

## Patentansprüche

1. Verfahren zum Verarbeiten in einem Telekommunikationssystem (2), aufweisend ein erstes Modul (5) zur drahtlosen Telekommunikation gemäß einem ersten Protokoll zur drahtlosen Telekommunikation, wobei das erste Modul angepasst ist, um ein Signal, das mindestens ein erstes Signal aufweist, gemäß dem ersten Protokoll auf einem Drahtlos-Übertragungskanal zu empfangen, und einen Block zur automatischen Verstärkungsberechnung (8), der einen Verstärkungswert in Abhängigkeit von dem in dem Drahtlos-Übertragungskanal empfangenen Signal ermittelt, und einen Verstärker aufweist, der angepasst ist, um das empfangene Signal in Abhängigkeit von einem Verstärkungswert zu verstärken, der von dem Block zur automatischen Verstärkungsberechnung (8) ermittelt wird,
wobei das Verfahren **dadurch gekennzeichnet ist, dass**, während das Telekommunikationssystem ein zweites Modul (3) zur drahtlosen Telekommunikation aufweist, das angepasst ist, um gemäß einem zweiten Kommunikationsprotokoll auf intermittierende Weise zweite Signale auf dem Drahtlos-Kommunikationskanal auszusenden, wobei jedes zweite Signal eine Dauer von kleiner als Tₘₐₓ hat, das Verfahren einen Schritt aufweist, bei dem, wenn ein zweites Signal durch den Block zur automatischen Verstärkungsberechnung ermittelt wird, wie in dem von dem ersten Modul im Drahtlos-Übertragungskanal empfangenen Signal vorhanden, ein aktueller Verstärkungswert von dem Block zur automatischen Verstärkungsberechnung unabhängig von der Stärke des zweiten Signals ermittelt wird, der Block zur automatischen Verstärkungsberechnung (8) einen Anstieg der Stärke des empfangenen Signals detektiert und, im Anschluss an die Detektion des Anstiegs, den Wert der Verstärkung in Abhängigkeit von dem Signal mit der auf diese Weise angestiegenen Stärke nur dann aktualisiert, wenn der Anstieg der Amplitude über eine Dauer von gleich Tₘₐₓ hinaus bestehen bleibt.

2. Verfahren gemäß Anspruch 1, wobei der Block zur automatischen Verstärkungsberechnung (8) den aktualisierten Verstärkungswert ab der Detektion während einer Verzögerung von gleich Tₘₐₓ oder gleich dem Minimum zwischen Tₘₐₓ und der Dauer, während der der Stärkenanstieg andauert, festhält.

3. Verfahren gemäß Anspruch 1, wobei der Block zur automatischen Verstärkungsberechnung (8) in einem Nennbetriebsmodus des Blocks zur automatischen Verstärkungsberechnung den aktuellen Verstärkungswert in Abhängigkeit von der Stärke des im Drahtlos-Übertragungskanal empfangenen Signals ermittelt,
wobei das Verfahren die folgenden Schritte aufweist, wenn ein zweites Signal durch das zweite Modul zur drahtlosen Telekommunikation auszusenden ist:
- Schätzen einer Verzögerung in Abhängigkeit von der Dauer, die für das Aussenden des zweiten Signals durch das zweite Modul (3) zur drahtlosen Telekommunikation erforderlich ist,
- im Anschluss an das Schätzen Auslösen eines Hilfsbetriebsmodus des Blocks zur automatischen Verstärkungsberechnung während einer Dauer, die mindestens gleich der geschätzten Verzögerung ist, und während der das zweite Signal ausgesendet wird, bei welchem der Block zur automatischen Verstärkungsberechnung einen aktuellen Verstärkungswert unabhängig von der Stärke des zweiten im Drahtlosübertragungskanal empfangenen Signals ermittelt.

4. Verfahren gemäß Anspruch 3, wobei ein zweites auszusendendes Signal eine Antwort auf eine Nachricht ist, die einen Code angibt und von dem zweiten Modul empfangen wird, und wobei die Dauer, die für das Aussenden des zweiten Signals erforderlich ist, in Abhängigkeit von dem Code geschätzt wird.

5. Verfahren gemäß irgendeinem der Ansprüche 1 bis 4, wobei sich das Telekommunikationssystem (2) an Bord einer mobilen Konstruktion (1) befindet, wobei das erste Modul (5) zur drahtlosen Telekommunikation ein Empfänger von mobiler Radiokommunikation ist, der angepasst ist, um mit einem entfernten mobile-Radiokommunikation-Netz zu kommunizieren, und wobei das zweite Modul (3) zur drahtlosen Telekommunikation ein Transponder ist, der angepasst ist, um mit einem entfernten Radar und/oder einem entfernten Transponder zu kommunizieren.

6. Verfahren gemäß irgendeinem der Ansprüche 1 bis 5, wobei das erste Protokoll zur drahtlosen Telekommunikation ein LTE-Protokoll ist.

7. Verfahren gemäß irgendeinem der Ansprüche 1 bis 6, wobei das zweite Signal des Signals, das in dem Drahtlos-Übertragungskanal von dem ersten Modul (5) zur drahtlosen Telekommunikation empfangen wird, von dem Verstärker in Abhängigkeit von dem aktualisierten berechneten Verstärkungswert verstärkt wird.

8. Verfahren gemäß irgendeinem der Ansprüche 1 bis 7, wobei das erste Protokoll zur drahtlosen Telekommunikation angepasst ist, damit das erste Modul detektiert, dass es ein Signal, das für dieses bestimmt ist, nicht korrekt empfangen hat, und um im Anschluss an das Detektieren das erste Signal korrekt zu rekonstruieren oder erneut an das zweite Modul senden zu lassen.

9. Modul (5) zur drahtlosen Telekommunikation gemäß einem ersten Protokoll zur drahtlosen Telekommunikation, das angepasst ist, um auf einem Drahtlos-Übertragungskanal ein Signal, das mindestens ein erstes Signal aufweist, gemäß dem ersten Protokoll zu empfangen, und aufweisend einen Block zur automatischen Verstärkungsberechnung (8), der angepasst ist, um einen Verstärkungswert in Abhängigkeit von dem im Drahtlos-Übertragungskanal empfangenen Signal zu ermitteln, und einen Verstärker, der angepasst ist, um das empfangene Signal in Abhängigkeit von einem durch den Block zur automatischen Verstärkungsberechnung ermittelten Signal zu verstärken,
wobei das Modul zur drahtlosen Telekommunikation für ein Telekommunikationssystem (2) bestimmt ist, welches ein anderes Modul (3) zur drahtlosen Telekommunikation aufweist, das angepasst ist, um auf intermittierende Weise zweite Signale auf dem Drahtlos-Kommunikationskanal gemäß einem zweiten Kommunikationsprotokoll auszusenden, wobei jedes zweite Signal eine Dauer von kleiner als Tₘₐₓ hat,
wobei das Modul zur drahtlosen Telekommunikation gemäß einem ersten Protokoll zur drahtlosen Telekommunikation **dadurch gekennzeichnet ist, dass** der Block zur automatischen Verstärkungsberechnung angepasst ist, um, wenn ermittelt wird, dass ein zweites Signal in dem empfangenen Signal vorhanden ist, einen aktuellen Verstärkungswert unabhängig von der Stärke des zweiten Signals zu ermitteln, und dass der Block zur automatischen Verstärkungsberechnung (8) angepasst ist, um einen Anstieg der Stärke des empfangenen Signals zu detektieren, und um im Anschluss an das Detektieren des Anstiegs den Wert der Verstärkung in Abhängigkeit von dem Signal mit der auf diese Weise angestiegenen Stärke nur dann zu aktualisieren, wenn der Anstieg der Amplitude über eine Dauer von gleich Tₘₐₓ hinaus bestehen bleibt.

10. Modul (5) zur drahtlosen Telekommunikation gemäß Anspruch 9, wobei der Block zur automatischen Verstärkungsberechnung (8) angepasst ist, um den aktualisierten Wert der Verstärkung ab der Detektion und während einer Verzögerung, die gleich Tₘₐₓ oder gleich dem Minimum zwischen Tₘₐₓ und der Dauer ist, während der der Anstieg der Stärke bestehen bleibt, festzuhalten.

11. Modul (5) zur drahtlosen Telekommunikation gemäß Anspruch 9, wobei der Block zur automatischen Verstärkungsberechnung (8) in einem Nennbetriebsmodus des Blocks zur automatischen Verstärkungsberechnung angepasst ist, um den aktuellen Verstärkungswert in Abhängigkeit von der Stärke des in dem Drahtlos-Übertragungskanal empfangenen Signals zu ermitteln und um, wenn ein zweites Signal durch das zweite Modul zur drahtlosen Telekommunikation auszusenden ist, eine Verzögerung in Abhängigkeit von der Dauer, die für das Aussenden des zweiten Signals durch das zweite Modul (3) zur drahtlosen Telekommunikation erforderlich ist, zu schätzen und einen Hilfsbetriebsmodus des Blocks zur automatischen Verstärkungsberechnung während einer Dauer von mindestens gleich der geschätzten Verzögerung und während der das zweite Signal ausgesendet wird, auszulösen, wobei der Block zur automatischen Verstärkungsberechnung angepasst ist, um einen aktuellen Verstärkungswert unabhängig von der Stärke des in dem Drahtlos-Übertragungskanal empfangenen zweiten Signals zu ermitteln.

12. Modul (5) zur drahtlosen Telekommunikation gemäß Anspruch 11, wobei ein zweites auszusendendes Signal eine Antwort auf eine Nachricht ist, die einen Code angibt und von dem zweiten Modul empfangen wird, und wobei die Dauer, die für das Aussenden des zweiten Signals erforderlich ist, in Abhängigkeit von dem Code geschätzt wird.

13. Modul (5) zur drahtlosen Telekommunikation gemäß irgendeinem der Ansprüche 9 bis 12 für ein Telekommunikationssystem, das sich an Bord einer mobilen Konstruktion (1) befindet, wobei das Modul (5) zur drahtlosen Telekommunikation ein Empfänger für mobile Radiokommunikation ist, der angepasst ist, um mit einem entfernten Netz für mobile Radiokommunikation zu kommunizieren, und wobei die zweiten Signale von einem Transponder ausgesendet werden, der angepasst ist, um mit einem entfernten Radar und/oder einem entfernten Transponder zu kommunizieren.

## Claims

1. Method for processing in a system (2) for telecommunication comprising a first module (5) for wireless telecommunication in accordance with a first wireless telecommunication protocol, said first module being adapted to receive a signal comprising at least a first signal in accordance with the first protocol on a wireless transmission channel and comprising an automatic gain calculation unit (8) which determines a gain value as a function of the signal received in said wireless transmission channel and an amplifier adapted to amplify said received signal as a function of a gain value determined by the automatic gain calculation unit (8); the method being **characterised in that**, the system for telecommunication comprising a second module (3) for wireless telecommunication adapted to intermittently transmit second signals on the wireless communication channel in accordance with a second communication protocol, each second signal having a duration less than Tₘₐₓ, the method comprises a step in which, when a second signal is determined, by the automatic gain calculation unit, as being present in the signal received by the first module in said wireless transmission channel, a current gain value is then determined by the automatic gain calculation unit independently of the power of said second signal, the automatic gain calculation unit (8) detects an increase in power of said received signal and, following the detection of said increase, updates the gain value as a function of the signal of power so increased only if the increase in amplitude continues beyond a time equal to Tₘₐₓ.

2. Method according to claim 1, wherein the automatic gain calculation unit (8) freezes the updated value of the gain starting from said detection for a delay time equal to Tₘₐₓ or equal to the minimum between Tₘₐₓ and the time for which the increase in power continues.

3. Method according to claim 1, wherein, in a nominal operating mode of the automatic gain calculation unit, said automatic gain calculation unit (8) determines the current gain value as a function of the power of the signal received in said wireless transmission channel;
said method comprises the following steps when a second signal is to be transmitted by the second module for wireless communication:
- estimation of a delay time which is a function of the time necessary for the transmission by the second module (3) for wireless telecommunication of said second signal;
- following said estimation, triggering of an auxiliary operating mode of the automatic gain calculation unit for a time which is at least equal to said estimated delay time and during which the second signal is transmitted, according to which the automatic gain calculation unit determines a current gain value independently of the power of the second signal received in said wireless transmission channel.

4. Method according to claim 3, wherein a second signal to be transmitted is a response to a message indicating a code and received by the second module, and said time necessary for the transmission of said second signal is estimated as a function of said code.

5. Method according to any one of claims 1 to 4, wherein the telecommunication system (2) is on board a mobile vessel (1), the first module (5) for wireless telecommunication is a mobile radiocommunications receiver adapted to communicate with a remote mobile radiocommunications network and the second module (3) for wireless telecommunication is a transponder adapted to communicate with a remote radar and/or a remote transponder.

6. Method according to any one of claims 1 to 5, wherein the first wireless telecommunication protocol is an LTE protocol.

7. Method according to any one of claims 1 to 6, wherein the second signal of the signal received in said wireless transmission channel by the first module (5) for wireless telecommunication is amplified by the amplifier as a function of said calculated updated gain value.

8. Method according to any one of claims 1 to 7, wherein the first wireless telecommunication protocol is adapted so that the first module detects that it has not correctly received a signal intended for it and, following said detection, correctly reconstructs said first signal or causes it to be re-transmitted to the second module.

9. Module (5) for wireless telecommunication in accordance with a first wireless telecommunication protocol, adapted to receive, on a wireless transmission channel, a signal comprising at least a first signal in accordance with the first protocol and comprising an automatic gain calculation unit (8) adapted to determine a gain value as a function of the signal received in said wireless transmission channel and an amplifier adapted to amplify said received signal as a function of a gain value determined by the automatic gain calculation unit;
said module for wireless telecommunication being intended for a system (2) for telecommunication comprising another module (3) for wireless telecommunication adapted to intermittently transmit second signals on the wireless communication channel in accordance with a second communication protocol, each second signal having a duration less than Tₘₐₓ,
said module for wireless telecommunication in accordance with a first wireless telecommunication protocol being **characterised in that** the automatic gain calculation unit is adapted, when it determines that a second signal is present in the received signal, to determine a current gain value independently of the power of said second signal, and **in that** the automatic gain calculation unit (8) is adapted to detect an increase in power of said received signal and, following the detection of said increase, to update the gain value as a function of the signal of power so increased only if the increase in amplitude continues beyond a time equal to Tₘₐₓ.

10. Module (5) for wireless telecommunication according to claim 9, wherein the automatic gain calculation unit (8) is adapted to freeze the updated value of the gain starting from said detection and for a delay time equal to Tₘₐₓ or equal to the minimum between Tₘₐₓ and the time for which the increase in power continues.

11. Module (5) for wireless telecommunication according to claim 9, wherein, in a nominal operating mode of the automatic gain calculation unit, said automatic gain calculation unit (8) is adapted to determine the current gain value as a function of the power of the signal received in said wireless transmission channel; and, when a second signal is to be transmitted by the second module for wireless telecommunication, to estimate a delay time which is a function of the time necessary for the transmission by the second module (3) for wireless telecommunication of said second signal and to trigger an auxiliary operating mode of the automatic gain calculation unit for a time which is at least equal to said estimated delay time and during which the second signal is transmitted, wherein the automatic gain calculation unit is adapted to determine a current gain value independently of the power of the second signal received in said wireless transmission channel.

12. Module (5) for wireless telecommunication according to claim 11, wherein a second signal to be transmitted is a response to a message indicating a code and received by the second module, and said time necessary for the transmission of said second signal is estimated as a function of said code.

13. Module (5) for wireless telecommunication according to any one of claims 9 to 12, for a telecommunication system (2) on board a mobile vessel (1), said module (5) for wireless telecommunication being a mobile radiocommunications receiver adapted to communicate with a remote mobile radiocommunications network and said second signals being transmitted by a transponder adapted to communicate with a remote radar and/or a remote transponder.
